# EUROPÄISCHE PATENTANMELDUNG

(11) **EP 0 908 536 A2**
(43) Veröffentlichungstag der Anmeldung: **14.04.1999**
(21) Anmeldenummer: 98115127.7
(22) Anmeldetag: 12.08.1998
(51) Int. Cl.: C25D 1/04, H01M 4/94

(54) **Verwendung einer Metallmembranfolie aus einer Palladiumlegierung zur Wasserstoffabtrennung**

(30) Priorität: 03.09.1997 DE 19738513
(71) Anmelder: DBB Fuel Cell Engines GmbH, 73230 Kirchheim/Teck-Nabern (DE)
(72) Erfinder: Poschmann, Thomas, 89073 Ulm (DE)

(57) **Zusammenfassung**

Verfahren zur Herstellung einer aus mehreren Metallen bestehenden Metallfolie.

Die Erfindung bezieht sich auf ein Verfahren zur Herstellung einer aus mehreren Metallen bestehenden Metallfolie.

Erfindungsgemäß werden jeweils wenigstens ein Galvanikbad mehrerer unterschiedlicher Badtypen bereitgestellt, wobei jeder Badtyp eine zur Abscheidung eines der beteiligten Metalle geeignete Elektrolytlösung beinhaltet. Es wird dann ein Schichtlagenstapel für die Metallfolie durch aufeinanderfolgendes galvanisches Abscheiden je einer Schichtlage alternierend aus den in den verschiedenen Badtypen enthaltenen Metallen am Umfang einer jeweiligen, als Kathode im entsprechenden Galvanikbad angeordneten und in Drehung versetzten Abscheidewalze gebildet. Vorzugsweise schließt sich daran ein Tempervorgang an, mit dem der Schichtlagenstapel in eine homogene Legierung der Metalle umgewandelt wird.

Verwendung z.B. zur Herstellung einer Metallmembranfolie für die Wasserstoffabtrennung aus einem Prozeßgas einer Methanolreformierungsanlage in einem brennstoffzellenbetriebenen Kraftfahrzeug.

## Beschreibung

Die Erfindung bezieht sich auf die Verwendung einer aus einer Palladiumlegierung bestehenden Metallmembranfolie, insbesondere einer solchen aus einer Legierung von Palladium und einem Metall der Gruppe VIII oder IB, zur Wasserstoffabtrennung aus einem Prozeßgasgemisch.

Metallmembranfolien zur Wasserstoffabtrennung lassen sich bekanntermaßen dazu verwenden, hochreinen Wasserstoff aus einem Gasgemisch zu gewinnen, von dessen Komponenten nur der Wasserstoff durch die Membranfolie hindurchzudiffundieren vermag. Ein wichtiges Anwendungsgebiet sind Methanolreformierungsanlagen zur Versorgung von Brennstoffzellensystemen in Kraftfahrzeugen mit dem benötigten Wasserstoff. Das im Reformierungsprozeß entstandene Produktgas enthält neben dem gewünschten Wasserstoff noch Kohlenmonoxid, Kohlendioxid und Wasserdampf. Die Wasserstoffabtrennung aus diesem Produktgas mittels Membranfolie ist ein bekannter Weg zur Bereitstellung des Wasserstoffs für die Brennstoffzellen, wobei insbesondere der Eintritt von Kohlenmonoxid in zu hoher Konzentration in die Brennstoffzellen verhindert werden muß, da dieses Gas dort als Katalysatorgift wirkt. Auch für andere Anwendungszwecke unter anderem in der Elektronikindustrie werden Metallmembranfolien zur Bereitstellung von hochreinem Wasserstoff, z.B. mit einem Reinheitsgrad von größer als 99,9999%, verwendet.

Metallmembranfolien zeichnen sich für den Einsatzzweck der Wasserstoffabtrennung gegenüber Membranfolien aus anderen Materialien, wie aus Keramiken, Gläsern und Polymeren, durch eine hohe Selektivität und Temperaturstabilität aus. Die für die Wasserstoffabtrennung eingesetzten Metallmembranfolien bestehen häufig aus Palladium oder Palladiumlegierungen. Palladium zeichnet sich durch hohe Wasserstoffspeicherfähigkeit bereits bei Raumtemperatur und niedrigen Wasserstoffdrücken aus. Für den Einsatz als Membranfolie ist reines Palladium allerdings kaum geeignet, da in einem gewissen Temperaturbereich eine β-Hydridphase entsteht, die zu einer Versprödung und damit einer Rißbildung führen kann. Daher wird dem Palladium meist ein Legierungspartner aus der Gruppe VIII oder IB hinzugefügt. In kommerziell erhältlich erhältlichen Wassersoffabtrenneinheiten werden typischerweise 50µm bis 100µm dicke, gewalzte Folien aus einer solchen Palladiumlegierung eingesetzt.

Die Herstellung von sehr dünnen Folien mit Dicken kleiner als 50µm durch Walzen ist prinzipiell aufgrund verschiedener Walz- und Zwischenglühschritte aufwendig und kostenintensiv. Zudem sind die gewalzten Folien in den geringsten Dicken nur mit einer maximalen Breite von ca. 150mm erhältlich. In der Elektronikindustrie wird daher mittlerweile auf die galvanische Herstellung von Folien aus Kupfer oder Nickel zurückgegriffen. Damit sind Foliendicken von 20 m oder weniger bei Folienbreiten von 1,5m bis 2m realisierbar. Bei dieser herkömmlichen galvanischen Herstellung wird das Kupfer oder Nickel aus einem Galvanikbad auf einer Edelstahlwalze abgeschieden, die in das galvanische Bad eintaucht und rotiert.

Aus der Offenlegungsschrift JP 1-222085 (A) ist es bekannt, mehrschichtige Metellfolien aus Cu-Fe, Fe-Ni, Cu-Ni oder Cu-Fe-Ni für Leiterplattenträger und magnetische Abschirmungen zu verwenden und dadurch herzustellen, daß ein Edelstahlband nach Blankglühen kontinuierlich nacheinander durch je ein Elektrolytbad hindurchgeführt wird, das zur Abscheidung je einer Schichtlage des Mehrschichtaufbaus der so entstehenden Metallfolie geeignet ist.

In der Patentschrift DE 452 788 ist ein Verfahren zur galvanischen Herstellung von Metallamellen gleichmäßiger Schichtstärke in elektrolytischen Bädern verschiedener Zusammensetzung offenbart, bei dem die Abscheidung der Metallmaterialien auf einem die elektrolytischen Bäder kontinuierlich durchlaufenden, z.B. aus Kupfer bestehenden Endlosband erfolgt. Das Band dient als Mutterkathode und wird über ein zugehöriges Rollensystem geführt. Es kann z.B. abwechselnd in ein Kupferbad und ein Nickelbad eingetaucht werden, um Kupfer- und Nickelschichtlagen in beliebig wiederholter, abwechselnder Schichtfolge zu erzeugen. Die so hergestellten Metallamellen werden für katalytische Reaktionen und Akkumulatoren verwendet.

In der Offenlegungsschrift JP 1-201429 (A) ist die Herstellung von Metallfolien aus einer Be-Cu-Legierung durch Plattieren von Be auf eine Folie aus Kupfer oder einer Kupferlegierung beschrieben, wobei nach dem Plattiervorgang eine Wärmebehandlung in einer Inertgas- oder Reduziergasatmosphäre zur Bewirkung einer legierungsbildenden thermischen Diffusion erfolgt. Die so hergestellte Metallfolie ist für elektrische Schalter und Relais und als elektromagnetisch abschirmendes Material verwendbar.

In der Offenlegungsschrift JP 1-104792 (A) ist die elektrolytische Herstellung einer Metallfolie aus einer Fe-Ni-Legierung mit hohem Nickelgehalt offenbart, wobei die galvanische Abscheidung auf einer Kathodentrommel aus Ti, Ta, Nb oder einer Ta-Nb-Legierung mit definierter Oberflächenrauhigkeit bei speziellen Prozeßparametern erfolgt, um den hohen Nickelgehalt zu erzielen.

Der Erfindung liegt als technisches Problem die Bereitstellung einer vorteilhaften Verwendung einer palladiumhaltigen Metallmembranfolie bei der Wasserstoffabtrennung z.B. in Methanolreformierungsanlagen für brennstoffzellenbetriebene Kraftfahrzeuge zugrunde.

Die Erfindung löst dieses Problem durch die Bereitstellung einer Verwendung mit den Merkmalen des Anspruchs 1. Die demgemäß verwendete Metallmembranfolie ist aus alternierenden Schichtlagen der verschiedenen Legierungspartner aufgebaut, die jeweils galvanisch abgeschieden werden. Dazu wird jeweils am Umfang einer als Kathode elektrisch vorgespannten und in Drehung versetzten Abscheidewalze die nächste Schichtlage auf die bis dahin erreichte Schichtstruktur aufgebracht.

Mit dieser Vorgehensweise lassen sich Metallmembranfolien bei vergleichbarem Aufwand in geringerer Dicke herstellen als mit einer Walztechnik, was insbesondere für Folien von großem Vorteil ist, die für Permeationszwecke, wie die vorliegende Wasserstoffabtrennung, verwendet werden. Denn eine Halbierung der Foliendicke resultiert in einer Verdopplung der Permeationsrate, so daß der Materialbedarf bei gegebener, geforderter Permeationsrate um den Faktor vier geringer ist. Die so hergestellten Membranfolien aus einer Palladium-Legierung eignen sich insbesondere zur Abtrennung von Wasserstoff aus dem Produktgas einer Methanolreformierungsreaktion.

In Weiterbildung der Erfindung nach Anspruch 2 kommt eine aus einer homogenen Legierung bestehende Metallmembranfolie zum Einsatz. Zu deren Herstellung wird die aus den alternierenden Schichtlagen der beteiligten Metalle aufgebaute Metallmembranfolie einem Tempervorgang unterzogen, der so gewählt ist, daß eine intermetallische Diffusion zwischen den einzelnen Schichtlagen auftritt, durch welche sich die Schichtlagen aus den verschiedenen Metallen zu einer homogenen Legierung verbinden. Dieses Verfahren eignet sich insbesondere zur Herstellung einer Metallmembranfolie, die aus einer Palladium-Legierung aus zwei Metallen aufgebaut ist.

In Weiterbildung der Erfindung nach Anspruch 3 kommt eine Membranfolie zum Einsatz, bei der wenigstens ein Teil der Schichtlagen im Durchlaufverfahren abgeschieden wird. Zur Durchführung des Durchlaufverfahrens wird eine entsprechende Anzahl aufeinanderfolgender Galvanikbäder mit den verschiedenen beteiligten Metallen und jeweils zugehöriger, rotierender Abscheidewalzen bereitgestellt, und die Metallfolie wird sukzessive über die aufeinanderfolgenden, in das jeweilige Galvanikbad eintauchenden Abscheidewalzen zur Abscheidung der jeweiligen Schichtlage geführt.

Vorteilhafte Herstellverfahren der erfindungsgemäß verwendeten Membranfolie sind in den Zeichnungen dargestellt und werden nachfolgend beschrieben. Hierbei zeigen:
- Fig. 1: eine schematische Seitenansicht zweier verschiedener Galvanikbäder zur Herstellung einer Metallmembranfolie aus zwei verschiedenen Metallen mittels galvanischer Abscheidung,
- Fig. 2: eine ausschnittweise Querschnittansicht einer mit den Bädern von Fig. 1 erhaltenen Metallmembranfolie und
- Fig. 3: eine schematische Seitenansicht einer für ein Durchlaufverfahren geeigneten Galvanikbadanlage zur Herstellung von Metallmembranfolien aus mehreren Metallen.

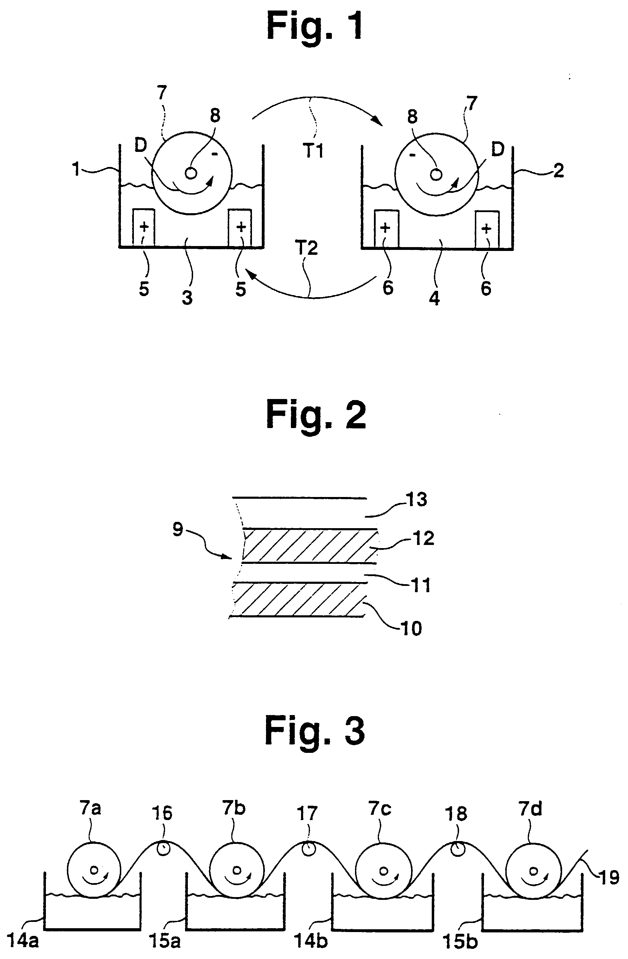

Fig. 1 veranschaulicht ein erstes Beispiel für die Herstellung einer Metallmembranfolie aus einer Palladiumlegierung aus zwei Metallen, z.B. einer Legierung von Palladium und einem Metall der Gruppe VIII oder IB, die sich insbesondere für den Einbau in eine Methanolreformierungsanlage eignet, um Wasserstoff vom Produktgas der Methanolreformierungsreaktion abzutrennen. Zur Herstellung einer solchen Folie werden zunächst zwei Galvanikbäder 1, 2 unterschiedlichen Typs bereitgestellt, von denen das eine Bad 1 eine ein erstes abzuscheidendes Metall, wie Palladium, enthaltende Elektrolytlösung 3 zwecks galvanischer Abscheidung dieses ersten Metalls und das andere Bad 2 zur Abscheidung des anderen, zweiten Metalls, wie z.B. eines aus der Gruppe VIII oder IB, eine dieses zweite Metall enthaltende Elektrolytlösung 4 beinhalten. Beide Bäder 1, 2 enthalten eine jeweilige Anode 5, 6.

Die Folie wird nun durch abwechselndes galvanisches Anscheiden je einer Schichtlage aus dem ersten und dem zweiten Metall am Umfang einer als Abscheidewalze verwendeten zylindrischen Edelstahlwalze 7 aufgebaut. Dazu wird die Edelstahlwalze 7 zu Beginn in das erste Bad 1 eingetaucht, z.B. etwa mit ihrem halben Umfang, wie in Fig. 1 dargestellt, und als Kathode geschaltet, d.h. elektrisch negativ gegenüber der Anode 5 vorgespannt. Dadurch scheidet sich eine Schichtlage aus dem ersten Metall, z.B. eine Palladium-Schichtlage, am Walzenumfang ab. Während des Abscheidevorgangs wird die Walze 7 um ihre Längsachse 8 mit geeigneter Drehgeschwindigkeit in Rotation versetzt, wie durch den Pfeil D angedeutet. Nachdem auf diese Weise eine erste Schichtlage aus dem ersten Metall mit einer Dicke von typischerweise höchstens einigen wenigen Mikrometern am Umfang der Edelstahlwalze 7 abgeschieden wurde, wird die Walze 7 aus dem ersten, z.B. palladiumhaltigen Bad 1 entnommen und, wie durch den Pfeil T1 in Fig. 1 symbolisiert, in analoger Weise in das zweite Galvanikbad 2 eingetaucht, dort wiederum als Kathode negativ vorgespannt und mit geeigneter Drehgeschwindigkeit in Rotation versetzt.

Dadurch scheidet sich auf der ersten Schichtlage des ersten Metalls eine erste Schichtlage aus dem zweiten Metall ab. Wenn diese Schichtlage in der gewünschten Dicke, die vorzugsweise in derselben Größenordnung liegt wie die Dicke der Schichtlage des ersten Metalls, gebildet ist, wird die Walze 7 aus dem zweiten Bad 2 entnommen und, wie durch den Pfeil T2 in Fig. 1 symbolisiert, erneut in das erste Bad 1 eingebracht, um eine zweite Schichtlage aus dem ersten Metall auf die erste Schichtlage mit dem zweiten Metall aufzubringen. Vorzugsweise wird die zweite Schichtlage des ersten Metalls in ungefähr derselben Dicke abgeschieden wie die betreffende erste Schichtlage. Anschließend wird die Walze 7 erneut vom ersten Bad 1 in das zweite Bad 2 transferiert, um eine zweite Schichtlage aus dem zweiten Metall auf die zweite Schichtlage des ersten Metalls aufzubringen, vorzugsweise wiederum in ungefähr derselben Dicke.

Der Aufbau einer solchermaßen mit der Vorgehensweise gemäß Fig. 1 erhaltenen Metallfolie 9 ist aus Fig. 2 zu erkennen. Die Folie 9 besteht aus einer ersten Palladium-Schichtlage 10, einer ersten Schichtlage 11 aus einem Metall der Gruppe VIII oder IB, einer zweiten Palladium-Schichtlage 12 und einer zweiten Schichtlage 13 aus dem Metall der Gruppe VIII oder IB. Je nach Anwendungsfall kann dieser Schichtaufbau um weitere alternierende Schichtlagen aus Palladium bzw. dem Metall der Gruppe VIII oder IB erweitert werden, indem die Edelstahlwalze 7 wiederholt abwechselnd in das erste Bad 1 und das zweite Bad 2 eingebracht und dort die betreffende Schichtlage galvanisch abgeschieden wird. Sobald der jeweils gewünschte Schichtaufbau erreicht ist, wird die dadurch gebildete Metallfolie vom Umfang der Edelstahlwalze 7 abgenommen. Durch Steuerung der Dicke der einzelnen Schichtlagen und durch Wahl einer entsprechenden Anzahl von Schichtlagen kann die Foliendicke in gewünschter Weise eingestellt werden. Insbesondere lassen sich mit diesem Verfahren auch sehr dünne Metallfolien mit Dicken deutlich unterhalb 50µm und vorzugsweise weniger als 20µm problemlos herstellen. Dabei sind außerdem ohne Schwierigkeiten Folienbreiten von bis zu beispielsweise 2m realisierbar, wozu die Edelstahlwalze 7 in entsprechender Länge gewählt wird.

Für den speziellen Anwendungszweck einer Metallmembranfolie zur Wasserstoffabtrennung, z.B. aus einem Prozeßgas einer Methanolreformierungsanlage zur Bereitstellung von Wasserstoff für ein Brennstoffzellensystem eines Kraftfahrzeugs, ist eine homogene Legierungszusammensetzung für die Folie erwünscht. Dies läßt sich durch Weiterverarbeitung der als Schichtlagenstapel gemäß Fig. 2 gebildeten Metallfolie erreichen. Die aus dem Schichtlagenstapel aufgebaute Metallfolie 9 wird dazu einem herkömmlichen Temperprozeß unterzogen, dessen Prozeßparameter so gewählt werden, daß eine ausreichende intermetallische Diffusion zwischen den einzelnen Schichtlagen 10 bis 13 auftritt, durch welche sich aus dem Schichtlagenstapel eine homogene Legierung der beiden beteiligten Metalle, im speziell erwähnten Beispiel des Palladiums einerseits und des Metalls der Gruppe VIII oder IB andererseits, bildet. Neben den Temperprozeßparametern werden zur Erzielung der homogenen Legierung auch die Dicken der einzelnen Schichtlagen 10 bis 13 passend gewählt, d.h. auf die Diffusionslängen der beteiligten Metalle abgestimmt, um eine optimale Durchmischung der Legierungspartner im Temperschritt zu erhalten.

Das beschriebene Verfahrensbeispiel ist folglich besonders geeignet, eine Metallmembranfolie aus einer zur Wasserstoffabtrennung geeigneten Palladium-Legierung mit sehr gleichmäßiger und geringer Dicke sowie bei Bedarf großer Breite mit verhältnismäßig geringem Aufwand zu fertigen. Die Materialkosten sind bezogen auf eine geforderte Wasserstoffseparationsleistung durch die geringe Dicke sehr niedrig, da sich mit abnehmender Foliendicke die Permeationsrate erhöht und daher sowohl weniger Material in der Dicke als auch in der Fläche benötigt wird. Die Verwendung des Palladium-Legierungsmaterials anstelle von reinem Palladium hat den Vorteil, daß das Problem der Folienversprödung durch die Wasserstoffeinwirkung weitestgehend vermieden wird.

Wenn die Folie, wie gezeigt, ohne darunterliegendes Folienträgermaterial hergestellt wird, werden die galvanischen Abscheidevorgänge jedenfalls so oft wiederholt, bis die gebildete Mehrschicht-Folie eine ausreichende mechanische Stabilität besitzt. Alternativ zum gezeigten Beispiel kann je nach Anwendungsfall die Folie auf einen flexiblen Folienträger aufgebracht werden, der die mechanische Stabilität gewährleistet.

Fig. 3 zeigt ein weiteres Verfahrensbeispiel, bei dem eine Metallfolie entsprechend Fig. 2 als Bandmaterial im Durchlaufverfahren gefertigt wird. Hierzu werden eine der Anzahl abzuscheidender Schichtlagen entsprechende Anzahl von seriellen Galvanikbädern 14a, 15a, 14b, 15b bereitgestellt, von denen eine erste Gruppe alternierender Bäder 14a, 14b vom Typ des ersten Galvanikbades 1 von Fig. 1 mit der das erste Metall, z.B. Palladium, enthaltenden Elektrolytlösung 3 und eine zweite Gruppe alternierender Bäder 15a, 15b vom Typ des zweiten Galvanikbades 2 von Fig. 1 mit der das zweite Metall, z.B. eines der Gruppe VIII oder IB, enthaltenden Elektrolytlösung 4 ist. Jedem Bad 14a, 15a, 14b, 15b ist eine eigene Edelstahlwalze 7a, 7b, 7c, 7d zugeordnet, die jeweils als Kathode negativ vorgespannt ist und mit ihrem untenliegenden Umfangsbereich in die betreffende Elektolytlösung eintaucht. Zwischen den Bädern 14a, 15a, 14b, 15b sind jeweilige Führungsrollen 16, 17, 18 vorgesehen, über welche der bis dahin jeweils gebildete Folienschichtaufbau vom Umfang der Abscheidewalze des vorangegangenen Bades zum Umfang der Abscheidewalze des nächsten Bades weitergeleitet wird, um dort die nächste Schichtlage galvanisch abzuscheiden. Die Führungsrollen 16, 17, 18 und die Abscheidewalzen 7a bis 7d rotieren synchron derart, daß die zu fertigende Metallfolie als durchlaufendes Folienband 19 gebildet wird. Die Länge der so gefertigten Metallfolie 19 ist folglich nicht auf die Umfangslänge einer Abscheidewalze beschränkt. Wie in Fig. 3 punktiert angedeutet, kann eine beliebige gewünschte Anzahl von Galvanikbädern für das Durchlaufverfahren zwecks Aufbau eines Folienschichtstapels mit entsprechend vielen Schichtlagen vorgesehen werden. Das Folienband 19 kann dann in einzelne Folienstücke gewünschter Länge geschnitten werden. Wenn eine homogene Zusammensetzung der Folie gewünscht ist, wird die Mehrschichtfolie 19 anschließend in der oben beschriebenen Weise getempert, was wahlweise noch als Bandmaterial oder mit den abgetrennten einzelenen Folienstücken erfolgen kann.

Die obige Beschreibung vorteilhafter Beispiele verdeutlicht, daß mit dem Verfahren aus mehreren Metallen bestehende Metallfolien einfach und kostengünstig in geringer Dicke und praktisch beliebiger Breite und Länge hergestellt werden können, und zwar wegen der geringeren mechanischen Belastung des Folienmaterials während der Herstellung in besserer Qualität als durch eine Walztechnik. Die galvanische Folienherstellung führt zudem zu einer stabileren Gefügestruktur der Folie. Es versteht sich, daß je nach Bedarf mit dem Verfahren auch Folien gefertigt werden können, die aus mehr als zwei unterschiedlichen Metallen bestehen, wozu jeweils eine entsprechende Anzahl von unterschiedlichen Galvanikbädern, d.h. mit unterschiedlichen Elektrolytlösungen, bereitgestellt wird, in denen alternierend je eine Schichtlage aus dem entsprechenden Metall für die Folie abgeschieden wird.

## Patentansprüche

1. Verwendung einer aus einer Palladiumlegierung bestehenden Metallmembranfolie zur Wasserstoffabtrennung aus einem Prozeßgasgemisch, die dadurch hergestellt ist, daß
- wenigstens je ein Galvanikbad (1, 2) mehrerer unterschiedlicher Badtypen bereitgestellt wird, wobei jeder Badtyp eine zur Abscheidung eines der metallischen Legierungspartner geeignete Elektrolytlösung (3, 4) beinhaltet, und
- ein Schichtlagenstapel für die Metallmembranfolie (9) durch aufeinanderfolgendes galvanisches Abscheiden von Schichtlagen alternierend aus je einem der in den verschiedenen Badtypen enthaltenen metallischen Legierungspartner am Umfang einer jeweiligen, in das Galvanikbad (1, 2) des betreffenden Badtyps eingetauchten, als Kathode elektrisch vorgespannten und in Drehung versetzten Abscheidewalze (7, 7a bis 7d) gebildet wird.

2. Verwendung nach Anspruch 1, wobei
die Metallmembranfolie weiter dadurch hergestellt ist, daß sie im Anschluß an den letzten galvanischen Abscheidevorgang einem Tempervorgang derart unterzogen wird, daß sich aus dem Stapel der alternierend aus den verschiedenen Metallen bestehenden Schichtlagen (10 bis 13) durch intermetallische Diffusion eine homogene Legierung aus den beteiligten Metallen bildet.

3. Verwendung nach Anspruch 1 oder 2, wobei
die Metallmembranfolie weiter dadurch hergestellt ist, daß wenigstens ein Teil der Schichtlagen (10, 11, 12, 13) im Durchlaufverfahren abgeschieden wird, wozu die Metallmembranfolie (19) als Bandmaterial über aufeinanderfolgende Abscheidewalzen (7a bis 7d) geführt wird, denen alternierend die Galvanikbäder (14a, 14b, 15a, 15b) der verschiedenen Badtypen zugeordnet sind.
